# EUROPEAN PATENT APPLICATION

(11) **EP 3 557 899 A1**
(43) Date of publication of application: **23.10.2019**
(21) Application number: 18168159.4
(22) Date of filing: 19.04.2018
(51) Int. Cl.: H04W 16/18, H04W 24/10

(54) **METHOD AND SYSTEM FOR DETERMINING WIRELESS NETWORK COVERAGE WITHIN AN ENVIRONMENT**

(71) Applicant: Siemens Aktiengesellschaft, 80333 München (DE)
(72) Inventor: Kornbichler, Andreas, 83623 Dietramszell (DE); Ramirez, Dr. Alejandro, 80797 München (DE); Teufel, Alexander, 90518 Altdorf (DE)

(57) **Abstract**

Disclosed embodiments for determining wireless network coverage within an environment are capable of determining the network coverage eliminating the necessity of measurement personnel intervention while allowing for an actual up-to-date survey of the wireless network coverage. According to an embodiment wireless clients moving autonomously within the environment are used in order to determine and collect parameters indicating a quality of the wireless network coverage. A coverage map generator is provided for generating a data representation indicating a signal strength within areas of a floorplan, e.g. of an industrial site. Other parameters may include a signal quality, a latency time, a bit error rate, a network status, a frame error rate and/or a wireless network channel.

## Description

### TECHNICAL FIELD

The disclosed embodiments relate to wireless network analysis and more specifically to determining wireless network coverage map within an environment.

### BACKGROUND

Wireless technologies are penetrating to industrial shop floor environments, due to the advantages that they possess over cabled technologies, such as mobility, flexibility, coverage over hard-to-reach locations, as well as lower installation and maintenance cost.

An industrial environment, however, is harsh for wireless communications compared to an office environment. Industrial environments are dominated by various metal objects, such as production machines, storage racks, materials and vehicles, such as automated guided vehicles or AGVs, cranes and forklifts.

These obstacles shadow radio propagations and cause coverage holes on desired areas thereby affecting the availability of the wireless communications, such as wireless local area network, WLAN, or industrial wireless local area networks, IWLAN. It is as well time-consuming and ineffective to perform trial-and-error manual deployment of wireless nodes.

Existing wireless planning tools are expected to systemize manual deployments so as to enhance effectiveness. Currently used planning tools, however, focus on office environments such that it is hard to plan industrial wireless local area networks due to their larger area and their vulnerability to prevalent shadowing effects in harsh industrial indoor environments.

Another drawback of existing radio planning tools is that they rely on dedicated measurements, which means that qualified test and measurement personnel has to walk through the complete site taking the measurements. In other words this kind of radio planning is almost as time-consuming and ineffective as a manual deployment of wireless nodes.

Further on, measurement results of such planning tools are merely valid at the time when these measurements have been taken. However, an industrial infrastructure is subject to frequent reorganizations and changes of production machines and materials. The wireless communication network in such infrastructures is accordingly governed by continuous changes which are not taken into account by presently known radio planning tools, eventually leading to areas with deficient coverage and different base stations using the same channel in the same area.

Accordingly there is a need in the art for determining wireless network coverage within an environment eliminating the necessity of measurement personnel intervention while allowing for an actual up-to-date survey of the wireless network coverage.

### SUMMARY

Embodiments for determining network coverage as described herein generally involve the usage of wireless clients moving autonomously within an environment.

In one embodiment a method for determining wireless network coverage within an environment is disclosed, the method comprising the steps of:
- determining at least one parameter indicating a signal strength of the wireless network by at least one of a plurality of wireless clients moving autonomously within the environment;
- comparing said at least one parameter with a plurality of threshold values to provide a comparison result;
- determining a location of said wireless client, wherein said location is associated with the determination of said parameter; and;
- generating a data representation indicating said signal strength using said plurality of threshold values and said location, wherein said data representation is coded with a value associated with at least one threshold value of said plurality of threshold values.

The method steps mentioned above are not restricted to their sequential order specified above. Particularly, the step of determining a location can be executed before or while executing the step of determining at least one parameter indicating a signal strength or before or while executing the step of comparing said at least one parameter with a plurality of threshold values.

In one embodiment a system for determining wireless network coverage within an environment is suggested, said system including:
- a plurality of autonomously moving wireless clients for determining at least one parameter indicating a signal strength of the wireless network and for determining a location of said wireless client;
- a network node for comparing said at least one parameter with a plurality of threshold values to provide a comparison result and for associating said location with the determination of said parameter; and;
- a coverage map generator for generating a data representation indicating said signal strength using said plurality of threshold values and said location, wherein said data representation is coded with a value associated with at least one threshold value of said plurality of threshold values.

In one embodiment a non-transitory computer-readable storage medium is disclosed, the medium having stored thereon computer executable program code which, when executed by a computing device, cause the computing device to perform operations comprising:
- receiving at least one parameter indicating a signal strength of the wireless network by at least one of a plurality of wireless clients moving autonomously within the environment;
- comparing said at least one parameter with a plurality of threshold values to provide a comparison result;
- receiving a location parameter indicating a position of said wireless client, wherein said location data is associated with the determination of said parameter; and;
- generating a data representation indicating said signal strength using said plurality of threshold values and said location, wherein said data representation is coded with a value associated with at least one threshold value of said plurality of threshold values.

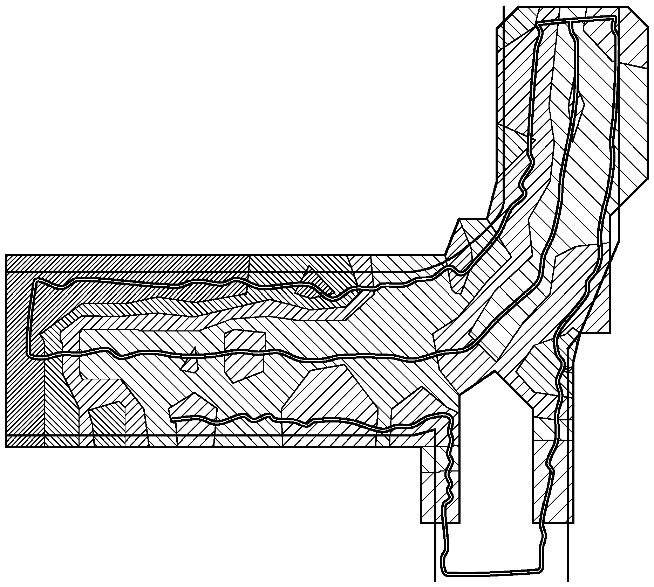

### DESCRIPTION OF THE DRAWING

The objects as well as further advantages of the present embodiments will become more apparent and readily appreciated from the following description of the preferred embodiments, taken in conjunction with the accompanying drawing in which the sole Figure shows a schematic floorplan of an industrial site along with an area map depicting a wireless network coverage within a respective area of the site.

### DETAILED DESCRIPTION

The FIG depicts a J-shaped floorplan of an industrial site neglecting usual industrial equipment or facilities like production machines, storage racks, materials and so on.

The floorplan is superimposed by a number of trajectories which are symbolized as rail trails in the drawing. These trajectories are determined by wireless clients moving autonomously within the environment. The wireless clients may be mounted or being part of vehicles, such as automated guided vehicles or AGVs, cranes and forklifts.

Multiple - not shown - wireless access points or wireless base stations are distributed among several locations of the industrial site in order to provide for a wireless network coverage of the site.

The floorplan is superimposed by a coverage map which comprises a number of wireless network coverage areas having a predefined signal strength. In the drawing more or less dense hatching of a respective coverage area denotes higher or lower signal strength within the hatched coverage area. Alternatively - not shown - colors are used in order to depict the signal strength. Such colored coverage maps are often referred to as »heat maps«.

According to an embodiment, each of a plurality of wireless clients moving autonomously within the environment determines - constantly, occasionally or on demand - at least one parameter indicating a signal strength of the wireless network. The wireless clients determine the received signal strength of associated base stations for one or more differing channels. Other parameters may include a signal quality, a latency time, a bit error rate, a network status, a frame error rate and/or a wireless network channel.

Before, during, or after determination of at least parameter, a location of said wireless client is determined. The location of the wireless client is associated with the determination of said parameter. Association of the location with the determination of said parameter may practically mean generating a complex data set including one or more parameter including said location data. The location of the wireless client may be determined by the wireless client, by a co-operation of more than one wireless client, by a co-operation of more than one wireless client with a at least one base station or wireless access point and/or by a co-operation of more than one wireless client with an indoor localization system.

The co-operation of a wireless client with base stations or wireless access points is preferably including a trilateration or multilateration including two or more base stations or wireless access points. The location of the wireless client may at least partially iclude an inertial measurement of the wireless client's movement. The indoor localization system may include the usage of Bluetooth beacons for determining the location in the absence of GPS signals within an indoor site. The indoor localization system may further include a pictorial analysis of the site thereby recognizing particular wireless clients and their position by optical, thermal or TOF cameras (time of flight).

Using a multiplicity of wireless sensors autonomously moving within the site, its network coverage can be determined in an up-to-date manner, using each individual wireless client as a »sensor«.

The wireless clients either transmit these parameters to their currently associated wireless access point or, alternatively, buffer these parameters internally fur further processing. The further processing may be executed by an arbitrary network node, server or computer inside or outside the wireless network. Such a network node may push a request to a specific or a plurality of wireless clients for transmitting at least one of said parameters to the network node.

In a fallowing step parameters are compared with one or more threshold values in order to provide a comparison result. The comparison result may include a binning of the parameter into one out of more classes. Simple classes may comprise a class of »excellent«, »good«, »acceptable« or »poor« for characterizing the signal quality. This comparison step may be executed by the wireless access point or by an arbitrary network node, e.g. a server, or, alternatively, by the wireless client itself.

Eventually a data representation indicating said signal strength is generated by using said plurality of threshold values and said location, wherein said data representation is coded with a value associated with at least one threshold value of said plurality of threshold values. The coded value may represent a color in order to generate a »heat map« for intuitively depicting both, the local density and intensity of the network coverage. This comparison step may be executed by a dedicated coverage map generator or by the wireless access point or, alternatively, by an arbitrary network node, e.g. a server. Alternatively, the comparison step may be executed by the wireless client itself.

Once the data representation has been finalized and a map of the signal strength is available, the coverage map generator can create alarms or suggestions on how to improve the performance and coverage of the wireless communication system.

The embodiments are not restricted to a particular wireless network protocol and include the usage of alternative wireless communication protocols, such as:
- A series of wireless communication standards developed by the Institute of Electrical and Electronics Engineers or IEEE:
   - A family of specifications for implementing wireless communication networks according to IEEE 802.11 xx wherein xx denotes a multiplicity of amendments to the intial and meanwhile obsolete communication standard IEEE 802.11.
   - WiMAX or Worldwide Interoperability for Microwave Access according to IEEE 802.16;
- Wireless communication protocols for mobile devices and data terminals, based on the GSM/EDGE and UMTS/HSPA technologies, here particularly including 5th generation wireless systems, or 5G, using millimeter wave bands.

The disclosed embodiments for determining wireless network coverage within an environment advantageously eliminate the necessity of measurement personnel intervention while allowing for an actual up-to-date survey of the coverage.

The environment, in which the network coverage is determined, comprises both, indoor and outdoor environments, including environments such as industrial environments, office environments, hospital environments, residential building environments or public outdoor environments such as trade fair sites, parks, traffic zones, roads or public transport sites. The wireless clients moving autonomously within the environment may include vehicles such as cars, trains or boats.

Preferably, the wireless clients moving autonomously within the environment are vehicles being equipped with a wireless client. The level of autonomy for the movement of a vehicle may comprise autonomous or semi-autonomous movement. The autonomous or semi-autonomous movement may comprise an assisted autonomy of vehicles in various grades ranging from fully autonomous vehicles without any driver interference down to vehicles with driver-assisting capabilities.

According to an embodiment, wireless clients moving autonomously within the environment are used in order to determine and collect parameters indicating a quality of the wireless network coverage. A coverage map generator is provided for generating a data representation indicating a signal strength within areas of a floorplan of the industrial site. Other parameters may include a signal quality, a latency time, a bit error rate, a network status, a frame error rate and/or a wireless network channel.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for determining wireless network coverage within an environment, comprising the steps of:
- determining at least one parameter indicating a signal strength of the wireless network by at least one of a plurality of wireless clients moving autonomously within the environment;
- comparing said at least one parameter with a plurality of threshold values to provide a comparison result;
- determining a location of said wireless client, wherein said location is associated with the determination of said parameter; and;
- generating a data representation indicating said signal strength using said plurality of threshold values and said location, wherein said data representation is coded with a value associated with at least one threshold value of said plurality of threshold values.

2. The method according to claim 1, wherein the environment is an industrial environment.

3. The method according to one of the aforementioned claims, wherein at least one parameter is indicative of:
- a signal quality;
- a latency;
- a bit error rate;
- a network status;
- a frame error rate; and/or;
- a wireless network channel.

4. The method according to one of the aforementioned claims, including a step of pushing a request for transmitting at least one of said parameters to at least one of the plurality of wireless clients.

5. The method according to one of the aforementioned claims, wherein the location of the wireless client is at least determined by the wireless client.

6. The method according to one of the aforementioned claims, wherein the location of the wireless client is at least determined by a wireless access point and/or a base station.

7. The method according to one of the aforementioned claims, wherein the location of the wireless client is at least determined based on multilateration including two or more base stations or wireless access points.

8. The method according to one of the aforementioned claims, wherein the location of the wireless client is at least determined based on an inertial measurement of the wireless client's movement.

9. The method according to one of the aforementioned claims, wherein the location of the wireless client is at least determined by a localization system within the environment.

10. The method according to one of the aforementioned claims, wherein said coded value represents color.

11. The method according to one of the aforementioned claims, wherein at least one of the autonomously moving wireless clients is a vehicle moving autonomously within the environment, the vehicle being equipped with a wireless client.

12. A System for determining wireless network coverage within an environment, comprising:
- a plurality of autonomously moving wireless clients for determining at least one parameter indicating a signal strength of the wireless network and for determining a location of said wireless client;
- a network node for comparing said at least one parameter with a plurality of threshold values to provide a comparison result and for associating said location with the determination of said parameter; and;
- a coverage map generator for generating a data representation indicating said signal strength using said plurality of threshold values and said location, wherein said data representation is coded with a value associated with at least one threshold value of said plurality of threshold values.

13. The system according to claim 12, wherein at least one of the autonomously moving wireless clients is a vehicle moving autonomously within the environment, the vehicle being equipped with a wireless client.

14. The system according to one of the aforementioned claims 12 and 13, wherein said coded value represents color.

15. A non-transitory computer-readable storage medium having stored thereon computer executable program code which, when executed by a computing device, cause the computing device to perform operations comprising:
- receiving at least one parameter indicating a signal strength of a wireless network by at least one of a plurality of wireless clients moving autonomously within an environment;
- comparing said at least one parameter with a plurality of threshold values to provide a comparison result;
- receiving a location parameter indicating a position of said wireless client, wherein said location data is associated with the determination of said parameter; and;
- generating a data representation indicating said signal strength using said plurality of threshold values and said location, wherein said data representation is coded with a value associated with at least one threshold value of said plurality of threshold values.
